# EUROPEAN PATENT APPLICATION

(11) **EP 4 629 447 A1**
(43) Date of publication of application: **08.10.2025**
(21) Application number: 24741124.2
(22) Date of filing: 02.01.2024
(51) Int. Cl.: H01R 13/502

(54) **PHOTOELECTRIC CONNECTOR, CONNECTOR ASSEMBLY, AND COMMUNICATION DEVICE**

(30) Priority: 13.01.2023 CN 202310094142
(71) Applicant: Huawei Technologies Co., Ltd., Shenzhen, Guangdong 518129 (CN)
(72) Inventor: DU, Changrao, Shenzhen, Guangdong 518129 (CN); HUANG, Chong, Shenzhen, Guangdong 518129 (CN); LIU, Shenghao, Shenzhen, Guangdong 518129 (CN)
(74) Representative: Isarpatent
(86) International application number: PCT/CN2024/070210
(87) International publication number: WO 2024/149125

(57) **Abstract**

A photoelectric connector, a connector assembly, and a communication device are provided. The photoelectric connector (10) includes a housing (1), a cover (2), a fiber connecting structure (3), and an electrical connecting structure (4). The housing (1) has a first port (a1) and a second port (a2) that are disposed opposite to each other. In a direction in which the first port (a1) points to the second port (a2), the housing (1) has an accommodation cavity (B) and a mounting position (C) that are in communication with each other. The mounting position (C) is configured to connect to a photoelectric composite cable (40). The cover (2) is configured to match the housing (1) to accommodate the photoelectric composite cable (40) that is connected to the mounting position (C). The fiber connecting structure (3) and the electrical connecting structure (4) are accommodated in the accommodation cavity (B). One end of the fiber connecting structure (3) extends to the mounting position (C), and the other end of the fiber connecting structure (3) extends to the first port (a1) of the housing (1). One end of the electrical connecting structure (4) extends to the mounting position (C), and the other end of the electrical connecting structure (4) extends to a side surface or the first port (a1) of the housing (1). The photoelectric connector can be assembled and implemented at a fiber to the room construction site, and has high reliability and security.

## Description

### CROSS-REFERENCE TO RELATED APPLICATIONS

This application claims priority to Chinese Patent Application No. 202310094142.8, filed with the China National Intellectual Property Administration on January 13, 2023 and entitled "PHOTOELECTRIC CONNECTOR, CONNECTOR ASSEMBLY, AND COMMUNICATION DEVICE", which is incorporated herein by reference in its entirety.

### TECHNICAL FIELD

This application relates to the field of photoelectric technologies, and in particular, to a photoelectric connector, a connector assembly, and a communication device.

### BACKGROUND

With development of information technologies and network technologies, optical fibers serving as a signal transmission medium are widely used in more scenarios. A photoelectric hybrid connector corresponding to a photoelectric composite cable integrates an optical fiber and a transmission copper wire, and this can resolve problems in broadband access and electrical signal transmission for devices. Therefore, the photoelectric hybrid connector becomes an important solution in construction of broadband fiber access.

A preferred solution for connection of a photoelectric hybrid cable is the use of an optical-electrical integrated connector, that is, one connector is used to implement optical-electrical coordinated transmission. Currently, most of photoelectric connectors are factory-prefabricated products, but this may bring difficulties in onsite exploration and pipe routing operations and increase a redundant cable during onsite construction due to a complex onsite environment.

### SUMMARY

This application provides a photoelectric connector, a connector assembly, and a communication device, where assembling thereof can be implemented at a fiber to the room construction site and have high reliability and security.

According to a first aspect, this application provides a photoelectric connector that can be applied to a fiber to the home construction site. The photoelectric connector includes a housing, a cover, a fiber connecting structure, and an electrical connecting structure. The housing provides bearing and support for other structures. The housing has a first port and a second port that are disposed opposite to each other, and a direction in which the first port points to the second port or a direction in which the second port points to the first port herein may be considered as an extension direction of an optical fiber during construction. The first port is configured to interconnect to a structure, for example, an adapter or a photoelectric socket, and the second port is correspondingly configured to connect to a photoelectric composite cable. In the direction in which the first port points to the second port, the housing has an accommodation cavity and a mounting position that are in communication with each other, and the mounting position is configured to connect to the photoelectric composite cable. The photoelectric composite cable may be connected to the mounting position from the second port, and the cover and the housing can match and be connected to accommodate the photoelectric composite cable that is connected to the mounting position. Both the fiber connecting structure and the electrical connecting structure are accommodated in the accommodation cavity. Specifically, one end of the fiber connecting structure extends to the mounting position, to enable an optical fiber in the photoelectric composite cable to be connected to the fiber connecting structure. The other end of the fiber connecting structure extends into the first port of the housing, to facilitate a connection of the fiber connecting structure to the structure, for example, the adapter or the photoelectric socket. One end of the electrical connecting structure extends to the mounting position, to facilitate a connection to a conducting wire in the photoelectric composite cable. The other end of the electrical connecting structure extends to a side surface or the first port of the housing.

In the foregoing photoelectric connector, the electrical connecting structure is not exposed outside the housing. This can provide good protection for the electrical connecting structure, has higher security, and facilitates mounting of the photoelectric connector at the fiber to the home construction site.

In a possible implementation, the electrical connecting structure includes two conductive sheets and two connecting terminals. The two connecting terminals are detachably connected to the two conductive sheets in one-to-one correspondence. At the construction site, the electrical connecting structure may be mounted on site, or different mounting sequences and mounting methods may be selected based on a requirement. The photoelectric composite cable generally has one optical fiber and two conducting wires, and the two conducting wires are located at two sides of the optical fiber in a width direction of the photoelectric composite cable. The two connecting terminals are disposed opposite to each other, and the two connecting terminals are configured to connect the two conducting wires in the photoelectric composite cable in one-to-one correspondence.

In a possible implementation, each connecting terminal includes a fastening section and two socket sections connected to two ends of the fastening section, and the two socket sections are disposed opposite to each other. When the connecting terminal is connected to the photoelectric composite cable, the two socket sections can be connected to the two conducting wires in the photoelectric composite cable, to improve connection reliability. The fastening section is connected to the conductive sheet, and a Y-shaped cutting edge for the conducting wire to be pressed into is formed at one end of the socket section away from the fastening section. A convex rib may be disposed on a side of the cover facing the housing. When the cover matches the housing, the convex rib can press the conducting wire into the Y-shaped cutting edge, to implement a reliable electrical connection between the conducting wire and the connecting terminal.

The fastening section has a notch. When the fastening section is connected to the conductive sheet, the notch is snap-fitted with the conductive sheet. The snap-fitting between the notch of the fastening section and the conductive sheet enables the connecting terminal to be mounted on the conductive sheet on site, and a mounting position and mounting time of the connecting terminal can be selected. Specifically, the connecting terminal may be first connected to the conducting wire in the photoelectric composite cable, and then the connecting terminal is connected to the conductive sheet. Alternatively, the connecting terminal may be first connected to the conductive sheet, and then the conducting wire in the photoelectric composite cable is pressed into the Y-shaped cutting edge of the socket section, so that the conducting wire is connected to the conductive sheet through the connecting terminal.

In a possible implementation, a connecting claw and a connecting portion are respectively formed at two ends of each connecting terminal. The connecting claw is in contact with and connected to the conductive sheet. Spiked teeth are formed on a side of the connecting portion facing the photoelectric composite cable, and the spiked teeth are configured to penetrate a cable sheath of the photoelectric composite cable to be in contact with the conducting wire. In this connection method, the connecting terminal and the conducting wire can be connected without stripping the cable sheath of the photoelectric composite cable. Possibly, the electrical connecting structure further includes a matching part. The matching part may be mounted on the housing, the two connecting terminals are fastened to the matching part, and the matching part can provide support for the two connecting terminals. During onsite construction, the matching part is mounted in the housing, and the connecting claws of the two connecting terminals may be in contact with and connected to the two conductive sheets in a holding manner. Then, the photoelectric composite cable is pressed toward the connecting portion, and the spiked teeth on the connecting portion penetrate the cable sheath of the photoelectric composite cable to connect to the conducting wire, so that the conducting wire is connected to the conductive sheet through the connecting terminal.

A mounting channel may be disposed on the matching part, the connecting terminal is mounted in the mounting channel, and the connecting portion and the connecting claw may extend out of two ends of the mounting channel. To facilitate the mounting of the matching part in the housing, a mounting protrusion may be further disposed on the matching part, and the mounting protrusion may be snap-fitted with the housing, to mount the matching part in the housing.

In a possible implementation, the electrical connecting structure further includes a coupling sheet, and the coupling sheet is connected between the two conductive sheets. The coupling sheet may be mounted in the accommodation cavity, and the coupling sheet can provide support for the two conductive sheets and prevent the two conductive sheets from being in contact and short-circuited.

The fiber connecting structure in the photoelectric connector provided in this application includes a ferrule, an inner housing, and a tail handle. The inner housing is fastened in the accommodation cavity, and the ferrule and the tail handle are respectively connected to two ends of the inner housing in a first direction. One end of the ferrule away from the tail handle extends out of the first port of the housing, to facilitate a connection of the ferrule to the optical fiber in the structure, for example, the photoelectric socket or the adapter. During onsite construction, the optical fiber in the photoelectric composite cable may sequentially pass through the tail handle and the inner housing and be connected to the ferrule.

The inner housing includes a bottom housing, a top housing, and a sleeve housing. The bottom housing and the top housing are snap-fitted to form a channel for the optical fiber in the photoelectric composite cable to pass through. The sleeve housing is sleeved outside the bottom housing and the top housing to lock the bottom housing and the top housing, to enable the top housing and the bottom housing to clamp the optical fiber.

Specifically, a locking rib is disposed on a side of the top housing away from the bottom housing, and the locking rib protrudes from a surface of the top housing. When the sleeve housing abuts against the locking rib outside the bottom housing and the top housing and generates friction, the sleeve housing can clamp and lock the bottom housing and the top housing. A height of the locking rib protruding from the top housing gradually increases in a direction in which the tail handle points to the ferrule. During onsite construction, after the optical fiber in the photoelectric composite cable passes through the tail handle and extends into a position between the bottom housing and the top housing, the sleeve housing is sleeved outside the bottom housing and the top housing from a side on which the tail handle is located and moves in the direction in which the tail handle points to the ferrule, and the friction between the locking rib and the sleeve housing gradually increases. In this case, the top housing and the bottom housing clamp the optical fiber in the photoelectric composite cable.

To facilitate an operation on the sleeve housing, a window in communication with the accommodation cavity is provided on the housing, and at least a part of the sleeve housing can be exposed from the window. During onsite construction, a force may be applied to the sleeve housing through the window, to enable the sleeve housing to move in the extension direction of the optical fiber.

Specifically, a lock groove may be further provided on the sleeve housing, and the lock groove can be exposed from the window on the housing. During construction, the lock groove can help a worker apply a force to the sleeve housing to move the sleeve housing.

In a possible implementation, a spring is disposed between the bottom housing and the housing, and the spring is sleeved on the tail handle. After the sleeve housing is mounted outside the top housing and the bottom housing, one end of the spring abuts against the bottom housing, and the other end of the spring abuts against the housing, to provide a force for the bottom housing to drive the bottom housing to move toward a side on which the ferrule is located, and implement a reliable connection between the optical fiber that is clamped between the bottom housing and the top housing and the ferrule.

In a possible implementation, the cover is rotatably connected to the housing, a rotating shaft hole is provided on the housing, a rotating shaft is disposed on the cover, and the cover may be rotatably mounted on the housing by rotating the rotating shaft to match the rotating shaft hole. The cover may rotate relative to the housing, and the cover has a first state of covering an opening and a second state of exposing the opening. When the cover is in the first state, the cover matches the housing to fasten the photoelectric composite cable that is connected to the mounting position. When the cover is in the second state, the mounting position is exposed, and an operation, for example, mounting or removal may be performed.

Possibly, the housing includes a front housing and a base, and the front housing is snap-fitted with the base, to mount the housing on site. The accommodation cavity is formed on the front housing, and the mounting position is formed on the base. The cover may be rotatably connected to the front housing. When the cover rotates relative to the front housing and switches between the first state and the second state, the mounting position may be exposed or covered. This helps a worker mount a structure at the mounting position on site. A first bayonet is disposed on the front housing, and a first snap fastener is disposed on the base. When the front housing is connected to the base, the first snap fastener is snap-fitted with the first bayonet. The rotating shaft hole is provided on the front housing, the rotating shaft is disposed on the cover, and the cover may be rotatably mounted on the front housing by rotating the rotating shaft to match the rotating shaft hole.

To facilitate a connection between the cover and the housing, a second snap fastener is disposed on the housing, and correspondingly, a second bayonet is disposed on the cover. When the cover is in the first state, the second snap fastener is snap-fitted with the second bayonet. The snap-fitting between the second bayonet and the second snap fastener enables the cover to be firmly connected to the housing. After the photoelectric connector and the photoelectric composite cable are mounted, the firm connection between the cover and the housing can improve reliability of a connection between the photoelectric connector and the photoelectric composite cable.

In a possible implementation, a pressing portion is disposed on a side of the cover facing the housing. When the photoelectric composite cable is connected to the mounting position, the cover switches from the second state to the first state, and the pressing portion presses the photoelectric composite cable into the housing, to fasten the photoelectric composite cable.

According to a second aspect, this application provides a connector assembly, including a photoelectric composite cable and any one of the photoelectric connectors provided in the first aspect. The photoelectric composite cable includes an optical fiber and two conducting wires located at two sides of the optical fiber. The optical fiber may be connected to a fiber connecting structure in the photoelectric connector to implement a fiber connection, and the conducting wires may be connected to an electrical connecting structure in the photoelectric connector to implement an electrical connection.

According to a third aspect, this application provides a communication device, including a housing and the connector assembly provided in the second aspect. The connector assembly may be mounted on the housing, to implement onsite construction, for example, fiber to the home.

### BRIEF DESCRIPTION OF DRAWINGS

FIG. 1 is a diagram of a structure of a fiber to the home network according to an embodiment of this application;
FIG. 2 is a diagram of a structure of a communication device according to an embodiment of this application;
FIG. 3A is a diagram of a structure of a photoelectric connector according to an embodiment of this application;
FIG. 3B is a diagram of a structure of the photoelectric connector according to an embodiment of this application;
FIG. 3C is an exploded view of a photoelectric connector according to an embodiment of this application;
FIG. 3D is a diagram of a structure of a cover in a second state in a photoelectric connector according to an embodiment of this application;
FIG. 4A is a diagram of a structure of a front housing in a photoelectric connector according to an embodiment of this application;
FIG. 4B is a diagram of a structure of a front housing in a photoelectric connector according to an embodiment of this application;
FIG. 5A is a diagram of a structure of a base in a photoelectric connector according to an embodiment of this application;
FIG. 5B is a diagram of a structure of a base in a photoelectric connector according to an embodiment of this application;
FIG. 6A is a diagram of a structure of a cover in a photoelectric connector according to an embodiment of this application;
FIG. 6B is a diagram of a structure of a cover in a photoelectric connector according to an embodiment of this application;
FIG. 7A is an exploded view of a fiber connecting structure in a photoelectric connector according to an embodiment of this application;
FIG. 7B is a diagram of a partial structure of a fiber connecting structure in a photoelectric connector according to an embodiment of this application;
FIG. 7C is a diagram of a structure of a top housing in a photoelectric connector according to an embodiment of this application;
FIG. 7D is a diagram of a structure of a sleeve housing in a photoelectric connector according to an embodiment of this application;
FIG. 8A is a diagram of a structure of an electrical connecting structure in a photoelectric connector according to an embodiment of this application;
FIG. 8B is an exploded view of an electrical connecting structure in a photoelectric connector according to an embodiment of this application;
FIG. 8C is a diagram of a structure of a connecting terminal of an electrical connecting structure in a photoelectric connector according to an embodiment of this application;
FIG. 9 is a diagram of a partial cross-sectional structure of a photoelectric connector according to an embodiment of this application;
FIG. 10A is a diagram of a connecting structure of a partial structure of a photoelectric connector and a photoelectric composite cable according to an embodiment of this application;
FIG. 10B is a diagram of a connecting structure of a partial structure of a photoelectric connector and a photoelectric composite cable according to an embodiment of this application;
FIG. 10C is a diagram of a connecting structure of a photoelectric connector and a photoelectric composite cable according to an embodiment of this application;
FIG. 10D is a diagram of a connecting structure of a photoelectric connector and a photoelectric composite cable according to an embodiment of this application;
FIG. 11 is a diagram of another structure of an electrical connecting structure in a photoelectric connector according to an embodiment of this application;
FIG. 12A is a diagram of another structure of a connecting terminal in a photoelectric connector according to an embodiment of this application;
FIG. 12B is a diagram of another partial structure of an electrical connecting structure in a photoelectric connector according to an embodiment of this application;
FIG. 13 is a diagram of another connecting structure of an electrical connecting structure in a photoelectric connector and a photoelectric composite cable according to an embodiment of this application; and
FIG. 14 is a diagram of another connecting structure of a photoelectric connector and a photoelectric composite cable according to an embodiment of this application.

### DESCRIPTION OF EMBODIMENTS

In the field of communication device technologies, a photoelectric hybrid connector can implement coordinated transmission of an optical fiber and a circuit, and becomes a solution for a plurality of broadband fiber access manners. The plurality of broadband fiber access manners include but are not limited to fiber to the room (fiber to the room, FTTR), fiber to the home (fiber to the home, FTTH), fiber to the curb (fiber to the curb, FFTC), fiber to the premises (fiber to the premises, FFTP), fiber to the node or neighborhood (fiber to the node or neighborhood, FFTN), fiber to the office (fiber to the office, FFTO), fiber to the service area (fiber to the service area, FFTSA), and the like. During onsite construction, a factory-prefabricated photoelectric hybrid connector cannot be adjusted based on a specific onsite condition, resulting in problems such as a redundant cable length and difficulty in exploration and pipe routing.

Based on this, embodiments of this application provide a photoelectric connector, a connector assembly, and a communication device. The photoelectric connector can be applied to broadband fiber access sites, can be conveniently and efficiently assembled on site, and has high security and reliability.

Terms used in the following embodiments are merely intended to describe specific embodiments, but are not intended to limit this application. The terms "one", "a/an", "the", "the foregoing", "this", and "the one" in singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to this embodiment. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "comprise", "have", and their variants all mean "including but not limited to", unless otherwise specifically emphasized in another manner.

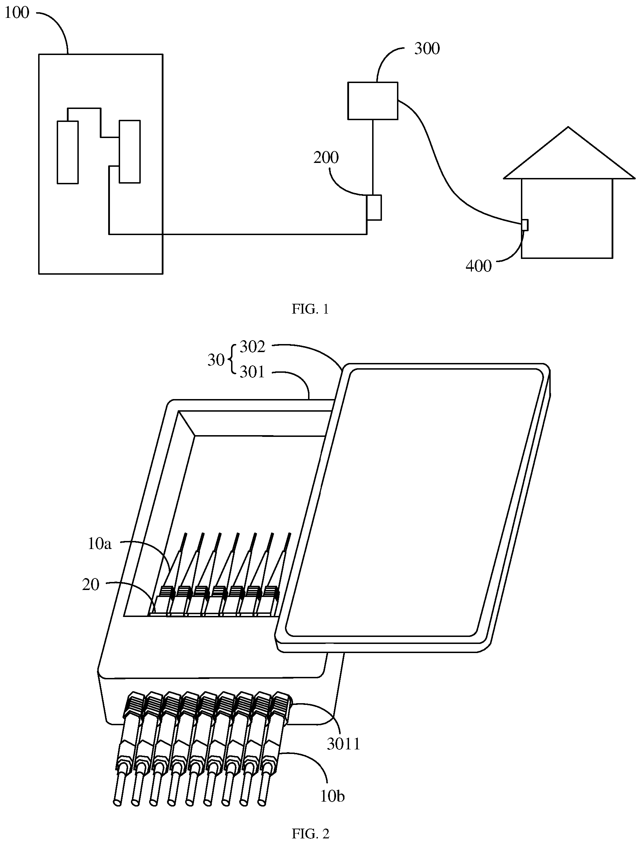

First, for a plurality of application scenarios of broadband fiber access, fiber to the home is used as an example for description in embodiments of this application. FIG. 1 is a diagram of a structure of a fiber to the home network. A connectorised fiber distribution point (connectorised fiber distribution point, CFDP) 200 and a fiber access terminal 300 are disposed between a central office (central office, CO) 100 and a customer splicing point (customer splicing point, CSP) 400. A communication device in the central office 100 is connected to the connectorised fiber distribution point 200 through an optical cable, to distribute a signal to the connectorised fiber distribution point 200. The connectorised fiber distribution point 200 transmits the signal to the fiber access terminal 300 through the optical cable, and then the fiber access terminal 300 outputs the signal to the customer splicing point 400 through the optical cable.

Based on the diagram of the structure of the fiber to the home network shown in FIG. **1****,** the communication device provided in embodiments of this application may be but is not limited to a fiber access terminal (fiber access terminal, FAT) or a splitting and splicing closure (splitting and splicing closure, SSC). For example, FIG. 2 shows a communication device. The communication device includes a mounting box 30, an adapter 20, a first connector 10a, and a second connector 10b. The adapter 20 is fastened on the mounting box 30, the first connector 10a is accommodated in the mounting box 30, and the second connector 10b is disposed outside the mounting box 30. The first connector 10a and the second connector 10b are connected through the adapter 20 to implement insertion and further implement photoelectric signal transmission. Accommodation space for accommodating the first connector 10a and the second connector 10b is provided in the adapter 20.

It should be understood that both the first connector 10a and the second connector 10b are connectors, and structures and functions of the first connector 10a and the second connector 10b may be the same, and a difference lies only in that application scenarios of the first connector 10a and the second connector 10b are different. Specifically, it may be considered that the first connector 10a is a connector used indoors, and is located in relatively enclosed space in the mounting box 30, so that external dust and water vapor can be effectively isolated. The second connector 10b is a connector used outdoors, is located in a relatively open environment outside the mounting box 30, and needs to have a better environment adaptability to adapt to a complex and variable environment.

Still refer to FIG. 2. The mounting box 30 includes a box body 301 and a top cover 302 that covers the box body 301. A plurality of external sockets 3011 disposed side by side are disposed on the box body 301. The external sockets 3011 may be arranged in one or more rows, for example, arranged in one row herein. The plurality of external sockets 3011 are disposed side by side, to arrange more connecting ports in limited space, so as to improve density of arranging the adapters 20 in the communication device. In correspondence to the plurality of external sockets 3011, a plurality of adapters 20 are disposed in the communication device. One adapter 20 may be correspondingly disposed or no adapter 20 may be disposed for each external socket 3011. Therefore, a quantity of adapters 20 is less than or equal to a quantity of external sockets 3011. When no adapter 20 is correspondingly disposed for the external socket 3011, the external socket 3011 may be used for another purpose. It should be understood that the external socket 3011 being disposed on the box body 301 is only a possible implementation. The external socket 3011 may alternatively be disposed on the top cover 302.

There are also a plurality of first connectors 10a and a plurality of second connectors 10b. Both a quantity of first connectors 10a and a quantity of second connectors 10b are not greater than the quantity of adapters 20, and the quantity of first connectors 10a and the quantity of second connectors 10b may be the same or may be different. Possibly, each first connector 10a may be correspondingly connected to one adapter 20, and each second connector 10b may be correspondingly connected to one adapter 20.

Possibly, one first connector 10a and one second connector 10b may be both correspondingly connected to one adapter 20. In this case, one opening may be provided at each of two ends of the adapter 20. One opening may be used to connect to the first connector 10a, and the other opening may be used to connect to the second connector 10b. When a group of corresponding first connectors 10a and second connectors 10b are inserted into two openings of a same adapter 20, a ferrule of the first connector 10a and a ferrule of the second connector 10b are interconnected in the adapter 20, to interconnect two optical fibers that need to be connected, and couple an optical signal output by a transmitting fiber to a receiving fiber to a maximum extent. In this case, one first connector 10a, one adapter 20, and one second connector 10b can implement transmission of an optical signal on one link.

A photoelectric connector 10 provided in embodiments of this application may be the first connector 10a or the second connector 10b in the foregoing terminal device. The following describes, by using a specific embodiment, a structure of the photoelectric connector 10 provided in embodiments of this application. Certainly, the photoelectric connector 10 provided in embodiments of this application may be further connected to a structure, for example, a photoelectric socket. Only a structure through which the photoelectric connector 10 matches the adapter 20 is used as an example herein.

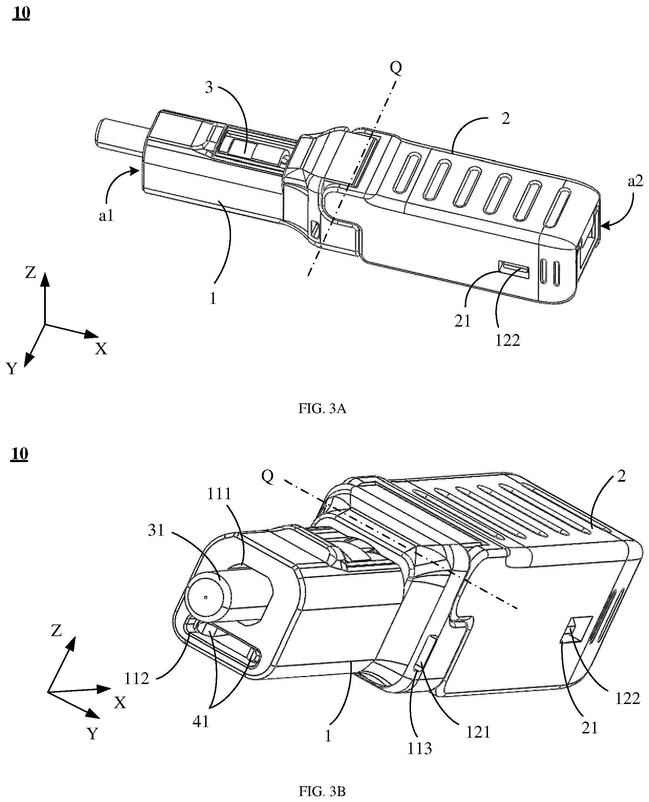

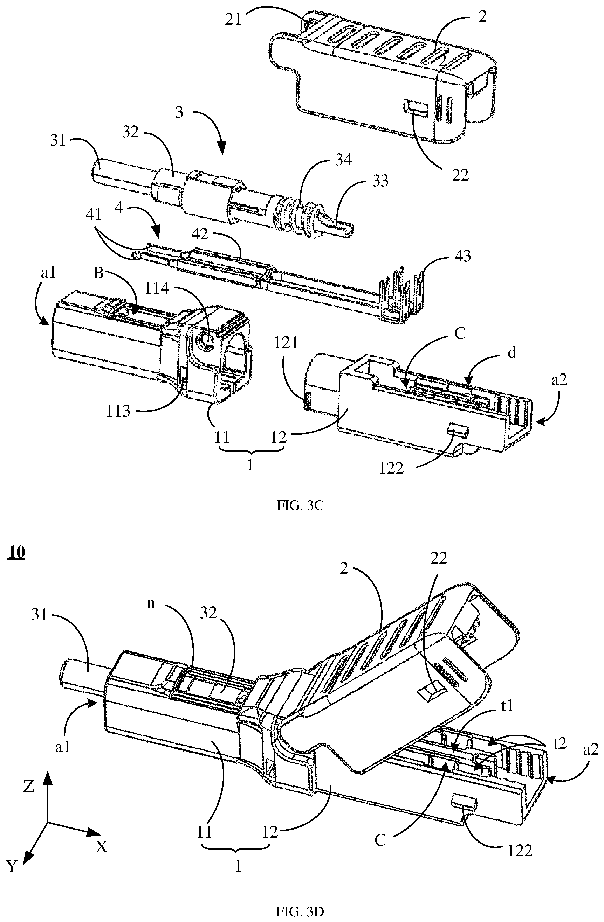

Refer to FIG. 3A, FIG. 3B, and FIG. 3C. FIG. 3A and FIG. 3B are diagrams of structures of a photoelectric connector 10 at different angles according to embodiments of this application. FIG. 3C is an exploded view of the photoelectric connector 10 according to an embodiment of this application. The photoelectric connector 10 provided in embodiments of this application includes a housing 1, a cover 2, a fiber connecting structure 3, and an electrical connecting structure 4. The housing 1 is in a long strip shape as a whole, and has a large length-diameter ratio. The length-diameter ratio is a ratio of a length to a radial dimension. A length direction of the housing 1 is set as a first direction X, a width direction of the housing 1 is set as a second direction Y, and a height direction of the housing 1 is set as a third direction Z. In other words, the housing 1 has a large length. For ease of description, the housing 1 has a first port a1 and a second port a2 that are opposite to each other in the first direction X. At a fiber to the home construction site, the first direction X may also be considered as an extension direction of an optical fiber. The first port a1 may be configured to interconnect to the adapter 20 in the foregoing terminal device, or may be configured to interconnect to a device, for example, a photoelectric socket. The cover 2 is rotatably mounted on the housing 1, and the cover 2 may rotate about a rotation center Q relative to the housing 1. The fiber connecting structure 3 and the electrical connecting structure 4 are disposed in the housing 1. The fiber connecting structure 3 is configured to connect to an optical fiber in a photoelectric composite cable, and the electrical connecting structure 4 is configured to connect to a conducting wire in the photoelectric composite cable.

Refer to FIG. 3A, FIG. 3B, and FIG. 3C together. The housing 1 includes a front housing 11 and a base 12, and the front housing 11 and the base 12 are connected in the first direction X to form the housing 1. In the first direction X, a side on which the front housing 11 of the photoelectric connector 10 is located is set as a front end, and a side on which the base 12 is located is set as a rear end. The first port a1 is formed at one end of the front housing 11 away from the base 12, and the second port a2 is formed at one end of the base 12 away from the front housing 11. It should be understood that, when the photoelectric connector 10 is connected to the adapter 20, the first port a1 may be accommodated in accommodation space of the adapter 20. The front housing 11 has an accommodation cavity B, and the base 12 has a mounting position C.

Both the fiber connecting structure 3 and the electrical connecting structure 4 are disposed in the accommodation cavity B. The fiber connecting structure 3 includes a ferrule 31, an inner housing 32, a tail handle 33, and a spring 34. The electrical connecting structure 4 includes a conductive sheet 41, a coupling sheet 42, and a connecting terminal 43. The first port a1 of the housing 1 is at the end of the front housing 11 away from the base 12, and the first port a1 is provided with an optical fiber port 111 and an electric conductor port 112. When the fiber connecting structure 3 and the electrical connecting structure 4 are mounted on the housing 1, the ferrule 31 of the fiber connecting structure 3 extends to the first port al. For example, an end portion of the ferrule 31 away from the tail handle 33 may extend out of the housing 1 from the optical fiber port 111. The conductive sheet 41 may extend to a side surface of the housing 1 or the first port a1 of the housing 1. The side surface of the housing 1 is a surface of the housing 1 parallel to the first direction X. It may be considered that an axial direction of the housing 1 is parallel to the first direction X, and the side surface of the housing 1 is a surface in a radial direction. The conductive sheet 41 shall not protrude from a surface of the housing 1, and the surface of the housing 1 includes the side surface and an end face of the first port a1. In other words, the conductive sheet 41 is not exposed outside the housing 1 from the structure. The entire electrical connecting structure 4 does not protrude from the surface of the housing 1. In an onsite construction operation, when a worker grasps the photoelectric connector 10, a hand of the worker does not directly touch the electrical connecting structure 4. This improves operation security, and also helps ensure connection reliability of the electrical connecting structure 4.

For example, one end of the conductive sheet 41 away from the base 12 does not protrude from the first port a1 in the first direction X. A window n in communication with the accommodation cavity B is further provided on a top side of the front housing 11 in the third direction Z. When the fiber connecting structure 3 is mounted on the housing 1, the inner housing 32 of the fiber connecting structure 3 may be exposed from the window n. When the front housing 11 is connected to the base 12, one end of the base 12 facing the front housing 11 can extend into the accommodation cavity B of the front housing 11, to partially sleeve the base 12 in the front housing 11, and limit the front housing 11 and the base 12 in a direction perpendicular to the first direction X. A first bayonet 113 in communication with the accommodation cavity B is disposed at one end of the front housing 11 that is configured to connect to the base 12, and correspondingly, a protruding first snap fastener 121 is disposed at one end of the base 12 that can extend into the accommodation cavity B. When the front housing 11 and the base 12 are interconnected, the first snap fastener 121 can enter the first bayonet 113 from the front housing 11 for snap-fitting, and fasten and limit the front housing 11 and the base 12 in the first direction X, to connect and fasten the front housing 11 and the base 12. The first snap fastener 121 and the first bayonet 113 are connected through snap-fitting, so that the housing 1 can also be mounted on site.

Specifically, a rotating shaft hole 114 is provided on the front housing 11, a rotating shaft 21 is disposed on the cover 2, and the cover 2 may be rotatably mounted on the front housing 11 by rotating the rotating shaft 21 to match the rotating shaft hole 114. A structure of the cover 2 adapts to a structure of the base 12, so that the cover 2 can half-wrap outside the base 12, and the cover 2 and the base 12 can form accommodation space for accommodating the photoelectric composite cable. It should be understood that, when the photoelectric composite cable is connected to the accommodation space formed through matching between the cover 2 and the base 12, the cover 2 may apply a specific force to the photoelectric composite cable, so that the cover 2 and the base 12 can fasten the photoelectric composite cable. Possibly, the accommodation space formed by the cover 2 and the base 12 is larger than a volume of the photoelectric composite cable. The cover 2 applies no force to the photoelectric composite cable, and the base 12 applies no force to the photoelectric composite cable. In other words, the cover 2 and the base 12 do not provide a fastening force for the photoelectric composite cable. In this case, the photoelectric composite cable may be fastened to the base 12 through a screw, or fastened by using another fastening method. Details are not described herein.

A bottom side of the base 12 is a side downward in the third direction Z, and a top side of the base 12 is a side upward in the third direction Z. There is an opening d on the top side of the base 12, the opening d is in communication with the second port a2, and the mounting position C can be viewed through the opening d. When the cover 2 rotates about the rotation center Q, the cover 2 may close the opening d, or may expose the opening d. A state of the cover 2 is defined. When the cover 2 closes the opening d, the cover 2 is in a first state. In this case, the cover 2 wraps outside the base 12, as shown in FIG. 3A and FIG. 3B. When the cover 2 exposes the opening d, the cover 2 is in a second state. In this case, as shown in FIG. 3D, the cover 2 is rotated to tilt relative to the base 12 and exposes the opening d. The mounting position C on the base 12 can be viewed through the opening d. A protruding second snap fastener 122 is disposed on the base 12, and correspondingly, a second bayonet 22 is disposed on the cover 2. When the cover 2 is in the first state, the cover 2 is sleeved outside the base 12, and the second snap fastener 122 can enter the second bayonet 22, to implement structural locking, so as to implement relative fastening between the cover 2 and the base 12. The snap-fitting between the second bayonet 22 and the second snap fastener 122 can improve connection tightness between the cover 2 and the base 12. After the photoelectric connector 10 and the photoelectric composite cable are mounted, a firm connection between the cover 2 and the base 12 can improve reliability of a connection between the photoelectric connector 10 and the photoelectric composite cable.

Still refer to FIG. 3D. A slot-shaped structure is used as an example of the mounting position C herein. Based on a structure of the base 12, the mounting position C has a first channel t1 for the optical fiber in the photoelectric composite cable to pass through and second channels t2 for two conducting wires in the photoelectric composite cable to pass through. In the second direction Y, the first channel t1 is located between two second channels t2. The first channel t1 may achieve a specific fastening function for the optical fiber, and the second channels t2 may achieve a specific fastening function for the conducting wires. When the photoelectric connector 10 and the photoelectric composite cable are interconnected, the optical fiber in the photoelectric composite cable passes through the first channel t1 and is interconnected to the fiber connecting structure 3, and the two conducting wires in the photoelectric composite cable respectively pass through the two second channels t2 and are interconnected to the electrical connecting structure 4. Certainly, there may be other implementations of the mounting position C. A specific structure of the mounting position C is not limited in this application, provided that the mounting position C can be configured to connect to the photoelectric composite cable. For example, the base 12 does not have two side walls in the second direction Y, and the mounting position C has only the first channel t1 for the optical fiber in the photoelectric composite cable to pass through.

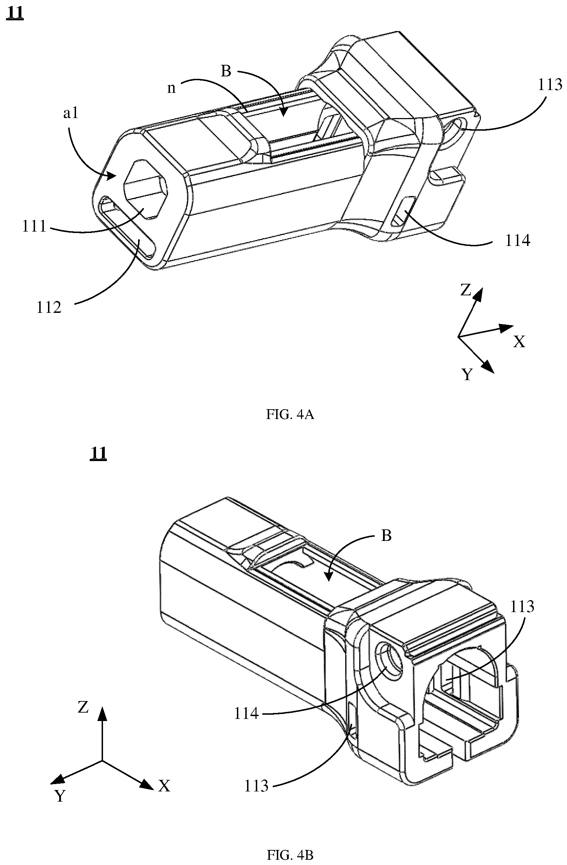

Refer to a structure of the front housing 11 shown in FIG. 4A and FIG. 4B. A front end of the front housing 11 is one end away from the base 12, and a rear end of the front housing 11 is one end configured to connect to the base 12. The front end and the rear end of the front housing 11 are in a communicated structure, and internal space formed through the communication is the foregoing accommodation cavity B. In FIG. 4A, the optical fiber port 111 and the electric conductor port 112 are located at the front end of the front housing 11, and both the optical fiber port 111 and the electric conductor port 112 are in communication with the accommodation cavity B. The optical fiber port 111 is configured to adapt to the ferrule 31. Therefore, the optical fiber port 111 is substantially square, and the square has four chamfered corners. The electric conductor port 112 is configured to accommodate the two conductive sheets 41 that are disposed opposite to each other, and the electric conductor port 112 is in a long strip shape extending in the second direction Y. In FIG. 4B, a radial dimension of one end of the front housing 11 that is configured to connect to the base 12 is greater than a size of a front end of the base 12, so that a part of the base 12 can easily extend into the front housing 11. The first bayonet 113 is disposed on a side of the front housing 11 that is configured to accommodate an end portion of the base 12, and two first bayonets 113 are symmetrically disposed in the second direction Y. A step surface is disposed on a part of the front housing 11 that is configured to connect to the cover 2, and an end face of the rotating shaft hole 114 is located at a position of a recess on the step surface. When the rotating shaft 21 on the cover 2 is rotated to match the rotating shaft hole 114, the cover 2 can adapt to the position of the recess, to enable an outer surface of the cover 2 and an outer surface of the front housing 11 to be relatively flat in a plane. The step surface can also provide specific angle limiting for rotation of the cover 2.

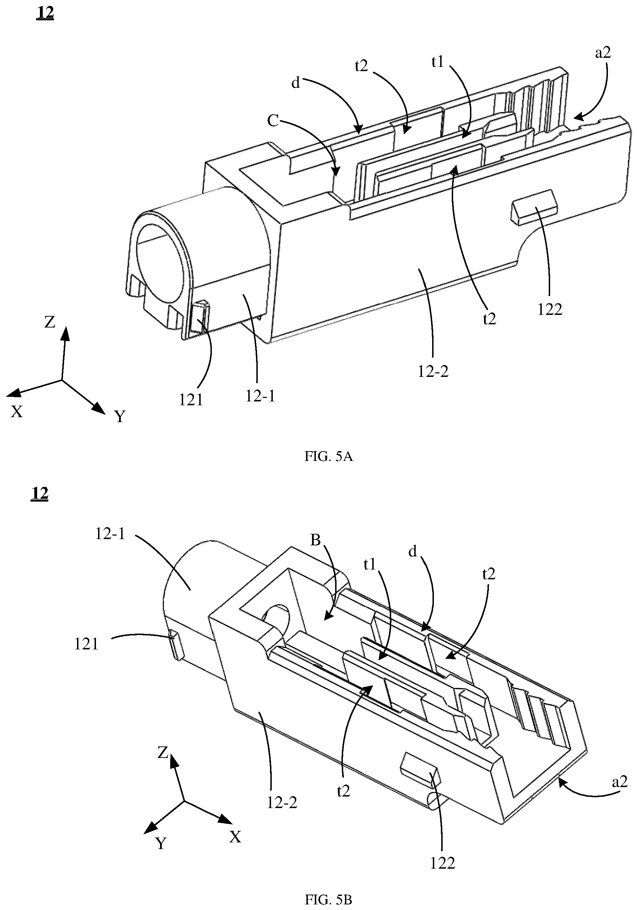

Refer to a structure of the base 12 shown in FIG. 5A and FIG. 5B. In the first direction X, the base 12 includes a mounting portion 12-1 and a base body 12-2. The mounting portion 12-1 adapts to a structure at the rear end of the front housing 11. During mounting, the mounting portion 12-1 can extend into the rear end of the front housing 11 to implement mounting with the front housing 11. The first snap fastener 121 is disposed on an outer side of the mounting portion 12-1. The base body 12-2 is box-shaped and has the opening d, and internal space of the base body 12-2 is the mounting position C. The second port a2 is at one end of the base body 12-2 away from the mounting portion 12-1.

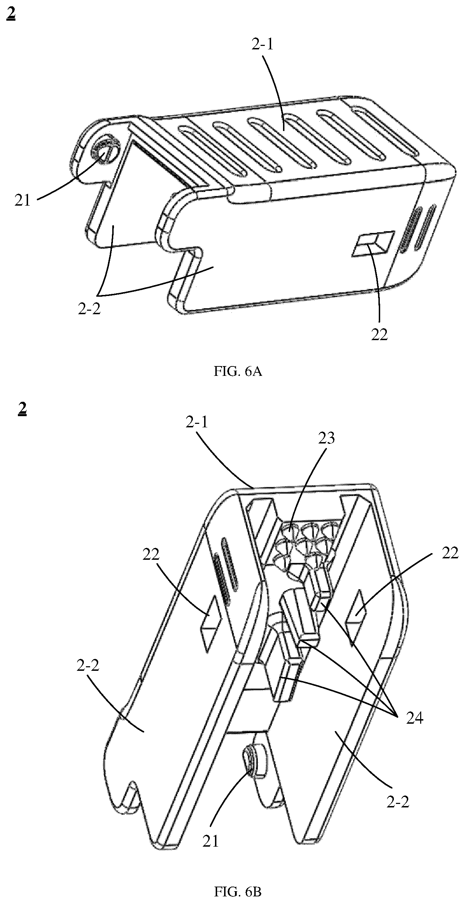

Refer to a structure of the cover 2 shown in FIG. 6A and FIG. 6B. The cover 2 includes a three-plane encircling structure formed by a top cover 2-1 and two opposite side covers 2-2, and space that can be used to accommodate the base 12 can be limited between the top cover 2-1 and inner walls of the two side covers 2-2. When the cover 2 in the first state matches the base 12, the top cover 2-1 covers the opening d of the base 12, and the two side covers 2-2 are correspondingly located outside two sides of the base 12 in the second direction Y. Two rotating shafts 21 of the cover 2 are symmetrically disposed. The rotating shaft 21 is specifically disposed on the side cover 2-2, and a position of the side cover 2-2 that is configured to dispose the rotating shaft 21 forms an ear-shaped structure that can adapt to the step surface on the front housing 11. The rotating shaft 21 is disposed on the ear-shaped structure. Two second bayonets 22 are also symmetrically disposed, and each second bayonet 22 penetrates through the side cover 2-2. When the cover 2 is snap-fitted with the base 12, the first snap fastener 121 on the base 12 may enter the second bayonet 22 from an inner side of the cover 2 to implement snap-fitting. In FIG. 6B, a pressing portion 23 is disposed on a side of an inner wall of the top cover 2-1, and the pressing portion 23 includes a plurality of cones. When the cover 2 is snap-fitted with the base 12, the pressing portion 23 may match the base 12 to fasten the photoelectric composite cable. In addition, convex ribs 24 are further disposed on a side of the inner wall of the top cover 2-1. When the photoelectric connector 10 is connected to the photoelectric composite cable, the convex ribs 24 are configured to help implement an electrical connection between the electrical connecting structure 4 and the conducting wires in the photoelectric composite cable.

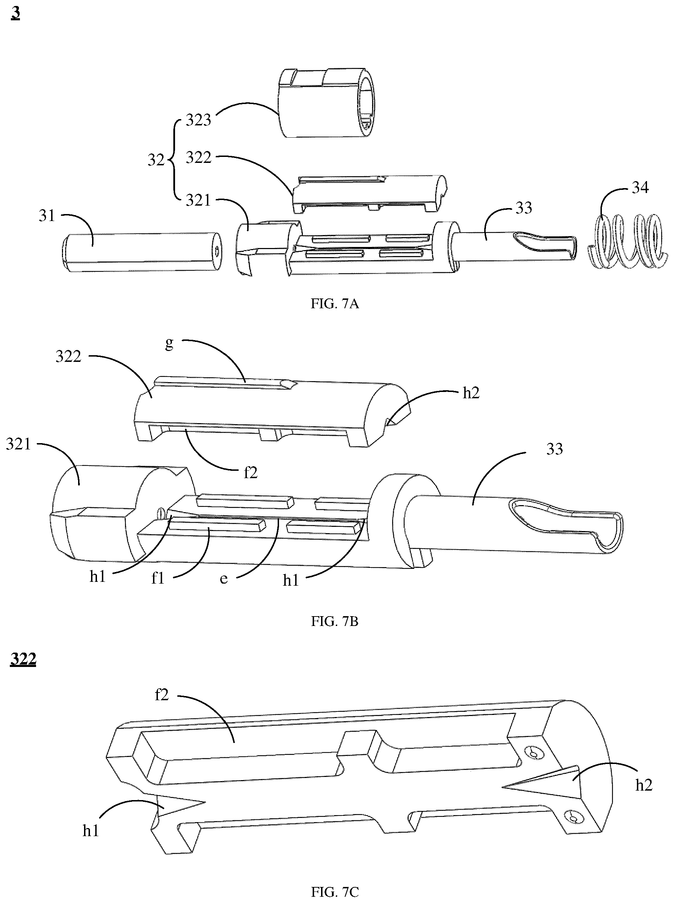

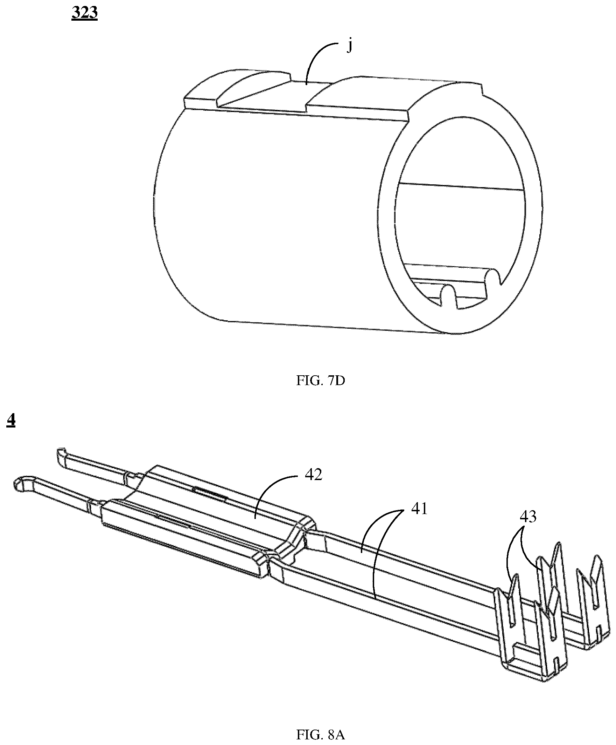

With reference to FIG. 3C, a structure of the fiber connecting structure 3 is shown in FIG. 7A. The fiber connecting structure 3 includes the ferrule 31, the inner housing 32, the tail handle 33, and the spring 34. The ferrule 31, the inner housing 32, and the tail handle 33 are sequentially connected in a head-to-tail manner in the first direction X, and the spring 34 is sleeved on the tail handle 33. An extension direction of the ferrule 31 is parallel to the first direction X. When the fiber connecting structure 3 is mounted in the housing 1, one end of the spring 34 abuts against the inner housing 32, and the other end of the spring 34 abuts against the base 12. When the optical fiber in the photoelectric composite cable is connected to the fiber connecting structure 3, the optical fiber sequentially passes through the tail handle 33 and the inner housing 32 and is connected to the ferrule 31. The tail handle 33 is tubular. This is convenient for the optical fiber to pass through. The inner housing 32 specifically includes a bottom housing 321, a top housing 322, and a sleeve housing 323. The bottom housing 321 is snap-fitted with the top housing 322 in a direction perpendicular to the first direction X, and the optical fiber in the photoelectric composite cable can be clamped and limited between the bottom housing 321 and the top housing 322, so that the optical fiber in the photoelectric composite cable can be inserted into the ferrule 31. The sleeve housing 323 can be sleeved on the bottom housing 321 and the top housing 322. As shown in FIG. 7B, an optical fiber slot e is formed on a side of the bottom housing 321 facing the top housing 322, and the optical fiber slot e can accommodate the optical fiber in the photoelectric composite cable. Refer to FIG. 7B and FIG. 7C together. Two ends of the optical fiber slot e in the length direction each are provided with a first guide portion h1 in a bell mouth shape. Two second guide portions h2 in a bell mouth shape are correspondingly disposed at two ends of the top housing 322 in the length direction. When the bottom housing 321 vertically matches the top housing 322, the first guide portion h1 and the second guide portion h2 match each other. This facilitates guiding the optical fiber. Bosses f1 are disposed on the bottom housing 321, and correspondingly, grooves f2 are provided on the top housing 322. Shapes and a quantity of grooves f2 adapt to shapes and a quantity of bosses f1. When the bottom housing 321 vertically matches the top housing 322, the bosses f1 and the grooves f2 match each other. Refer to FIG. 7B and FIG. 7D together. A locking rib g is disposed on a side of the top housing 322 away from the bottom housing 321. A height of the locking rib g protruding from the top housing 322 gradually increases in a direction in which the tail handle 33 points to the ferrule 31. When the bottom housing 321 vertically matches the top housing 322, the sleeve housing 323 may be sleeved on the bottom housing 321 and the top housing 322 from a side on which the tail handle 33 is located. When the sleeve housing 323 moves from the side on which the tail handle 33 is located to a side on which the ferrule 31 is located, friction between the locking rib g and an inner wall of the sleeve housing 323 gradually increases, and finally the sleeve housing 323 is tightly clamped outside the bottom housing 321 and the top housing 322, to mount the inner housing 32. One end of the spring 34 abuts against the bottom housing 321, and the other end of the spring 34 abuts against the base 12. The spring 34 may provide a pre-tightening force for the bottom housing 321, to enable the bottom housing 321 to tend to move from the side on which the tail handle 33 is located to the side on which the ferrule 31 is located, so that the bottom housing 321 and the ferrule 31 can be pressed tightly and the optical fiber clamped between the bottom housing 321 and the top housing 322 can be reliably connected to the ferrule 31. A lock groove j is provided on an outer surface of the sleeve housing 323. With reference to FIG. 3A, it can be learned that, when the fiber connecting structure 3 is mounted in the housing 1, the lock groove j on the sleeve housing 323 is exposed from the window n of the housing 1. This helps a worker operate, through the lock groove j, the sleeve housing 323 to unlock or lock the sleeve housing 323. When the worker applies a force to the sleeve housing 323 through the lock groove j to enable the sleeve housing 323 to move from the side on which the ferrule 31 is located to the side on which the tail handle 33 is located, the sleeve housing 323 may gradually release a locking force on the top housing 322 and the bottom housing 321, and the optical fiber cannot be clamped between the top housing 322 and the bottom housing 321. In this case, the connection between the optical fiber and the fiber connecting structure 3 may be released.

It should be understood that the fiber connecting structure 3 in embodiments of this application is merely a possible example of a structure, and a specific structure of the fiber connecting structure 3 may have another structure variant. Details are not described herein.

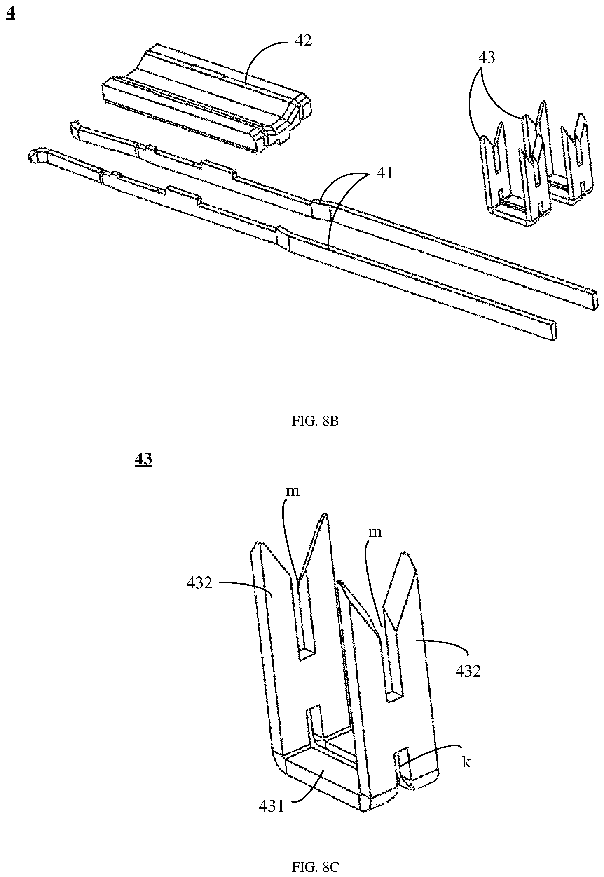

For a structure of the electrical connecting structure 4, refer to FIG. 8A and FIG. 8B. The electrical connecting structure 4 includes the conductive sheet 41, the coupling sheet 42, and the connecting terminal 43. A quantity of conductive sheets 41 is 2, and the two conductive sheets 41 are disposed opposite to each other in the second direction Y. The coupling sheet 42 is connected between the two pads 41, and the coupling sheet 42 may be fastened in the accommodation cavity B of the housing 1. The coupling sheet 42 may achieve a fastening function for the two conductive sheets 41 and further prevent the two conductive sheets 41 from being in contact and performing electric conduction. Two connecting terminals 43 are also disposed, and each connecting terminal 43 is correspondingly electrically connected to one conductive sheet 41. The connecting terminals 43 are configured to connect the two conducting wires in the photoelectric composite cable. In the electrical connecting structure 4 shown in FIG. 8A, the connecting terminals 43 are snap-fitted with the conductive sheets 41.

As shown in FIG. 8C, the connecting terminal 43 includes a fastening section 431 and two socket sections 432. The fastening section 431 and the two socket sections 432 are of an integrated structure. The integrated structure may be prepared from a sheet through a process, for example, sheet metal cutting. When the connecting terminal 43 is fastened on the conductive sheet 41, the two socket sections 432 are opposite to each other in the first direction X. When the conducting wire in the photoelectric composite cable is connected to the two socket sections 432, the two socket sections 432 can provide more stable support for the conducting wire, to implement a more reliable electrical connection. A notch k is provided on the fastening section 431. When the fastening section 431 is fastened on the conductive sheet 41, the notch k can be snap-fitted with the conductive sheet 41, and the conductive sheet 41 can partially enter the notch k to implement structural matching. A Y-shaped cutting edge m is formed at one end of each socket section 432 away from the fastening section 431. When the connecting terminal 43 is connected to the conducting wire in the photoelectric composite cable, the Y-shaped cutting edge m is used for the conducting wire to be pressed into. With reference to the convex ribs 24 on the cover 2 shown in FIG. 6B, the convex ribs 24 are configured to press the conducting wire into the Y-shaped cutting edge m.

It should be understood that the connecting terminal 43 shown in FIG. 8C and the conductive sheet 41 may be separated from each other and detachable. During mounting, the connecting terminal 43 may be first connected to the conducting wire, and then the connecting terminal 43 is mounted on the conductive sheet 41, to complete an electrical connection between the conducting wire and the conductive sheet 41. Certainly, the connecting terminal 43 and the conductive sheet 41 may alternatively be connected in another detachable method, and the snap-fitting herein is merely an example of a structure. The detachable connection method between the connecting terminal 43 and the conductive sheet 41 can provide a more flexible onsite mounting method in onsite construction of optical fiber access. This improves convenience and adaptability of the construction.

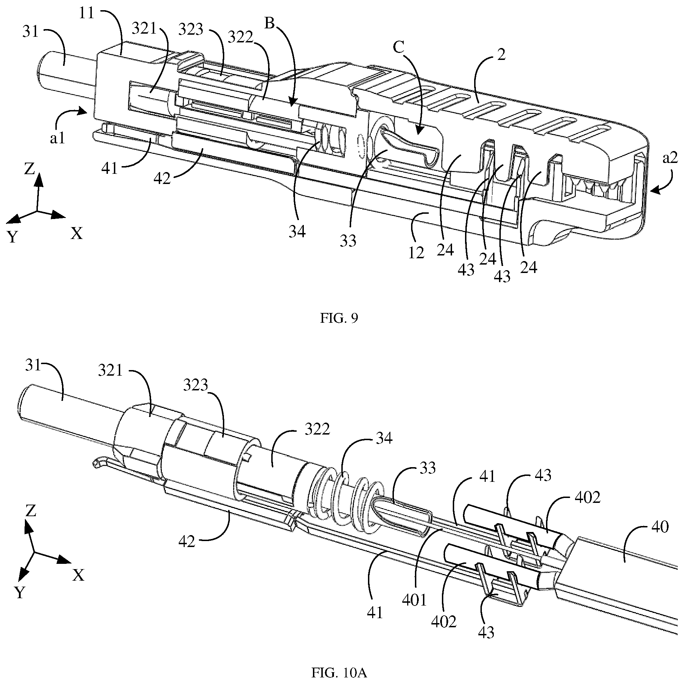

Based on the structural examples of the fiber connecting structure 3 and the electrical connecting structure 4 in the photoelectric connector 10 in the foregoing embodiments, FIG. 9 is a diagram of a partial cross-sectional structure of the photoelectric connector 10. As shown in FIG. 9, the fiber connecting structure 3 and the electrical connecting structure 4 are disposed, in a vertical stacking manner in the third direction Z, in the accommodation cavity B that is formed by the front housing 11 of the housing 1, to enable the fiber connecting structure 3 to be located between the electrical connecting structure 4 and the cover 2. The ferrule 31 of the fiber connecting structure 3 extends out of the front housing 11, in other words, the ferrule 31 protrudes out of the first port a1 of the housing 1. The tail handle 33 of the fiber connecting structure 3 extends into the mounting position C formed on the base 12. One end of the conductive sheet 41 of the electrical connecting structure 4 facing the first port a1 is hidden in the front housing 11, in other words, the conductive sheet 41 does not protrude from the first port a1 of the housing 1. The conductive sheet 41 of the electrical connecting structure 4 extends to the mounting position C, and the connecting terminal 43 is mounted on the conductive sheet 41 at the mounting position C. Such structure arrangement can provide good protection for the electrical connecting structure 4 and prevent a security risk caused by exposure of the electrical connecting structure 4 outside the housing 1.

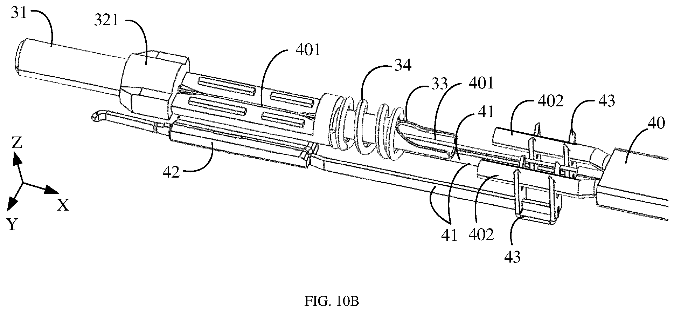

FIG. 10A is a diagram of a connecting structure of the fiber connecting structure 3, the electrical connecting structure 4, and the photoelectric composite cable 40. The first direction X is a length direction of the photoelectric composite cable 40. An optical fiber 401 and two conducting wires 402 located on two sides of the optical fiber 401 are provided at one end of the photoelectric composite cable 40 that is configured to connect to the photoelectric connector 10. To expose the optical fiber 401 and the two conducting wires 402, a cable sheath of the photoelectric composite cable 40 needs to be stripped. A connection method of the optical fiber 401 and the fiber connecting structure 3 is as follows: The optical fiber 401 extends into the tail handle 33 in the first direction X, continues to extend through a position between the top housing 322 and the bottom housing 321, and then is connected to the ferrule 31. When the optical fiber 401 passes through the position between the top housing 322 and the bottom housing 321, to facilitate the optical fiber 401 to pass through, a force may be applied to remove the sleeve housing 323, to enable the sleeve housing 323 to release the locking between the top housing 322 and the bottom housing 321. Therefore, the optical fiber 401 is not pressed tightly between the top housing 322 and the bottom housing 321, and the optical fiber 401 may pass through more easily to reach the ferrule 31. The two conducting wires 402 are connected to the two connecting terminals 43 of the electrical connecting structure 4 in one-to-one correspondence. Specifically, between the conducting wire 402 and the connecting terminal 43 that correspond to each other, the conducting wire 402 is pressed into the Y-shaped cutting edge m of the connecting terminal 43, implement an electrical connection between the conducting wire 402 and the conductive sheet 41 through the connecting terminal 43. In FIG. 10B, the top housing 322 and the sleeve housing 323 are hidden. It can be viewed that the optical fiber 401 sequentially passes through the tail handle 33 and the bottom housing 321 and is connected to the ferrule 31.

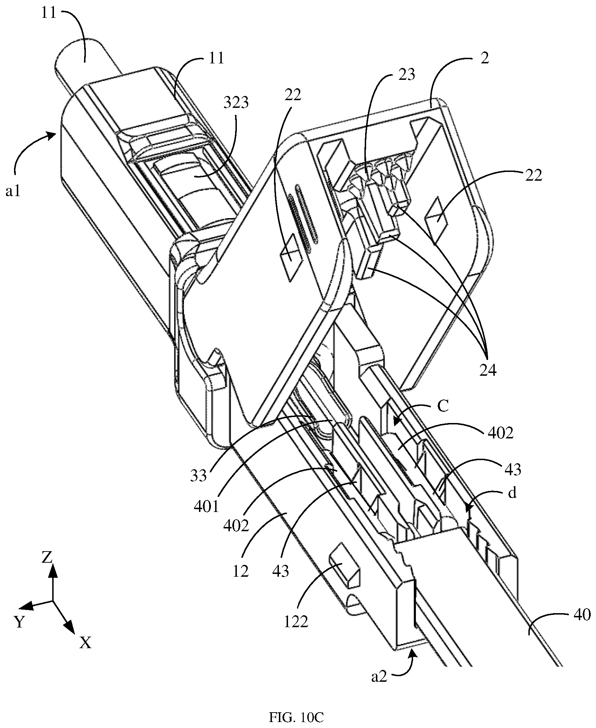

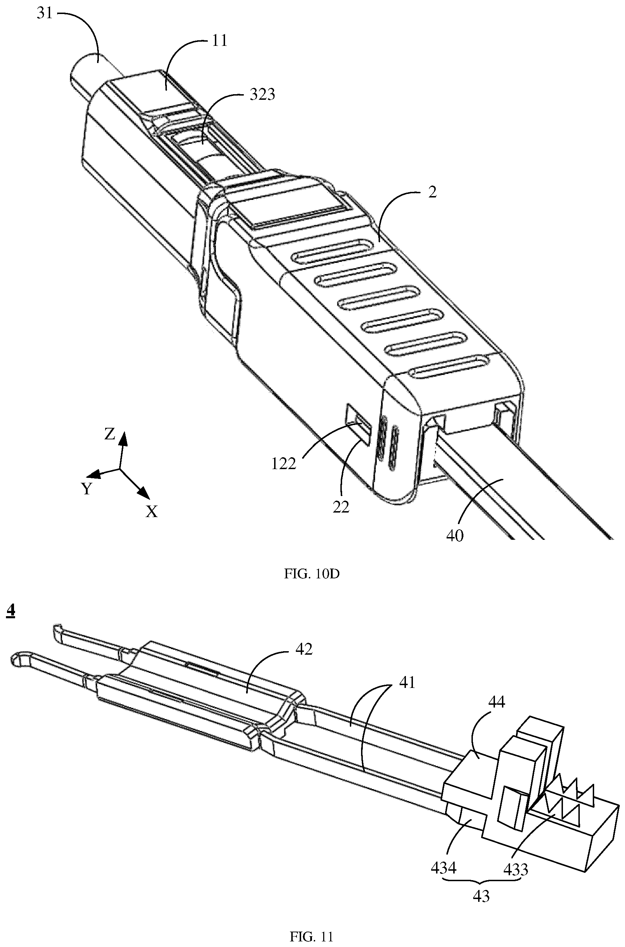

FIG. 10C is a diagram of a connecting structure of the photoelectric composite cable 40 and the photoelectric connector 10. The cover 2 is in the second state, and the cover 2 can expose the opening d on the top of the base 12, so that the mounting position C can be exposed. For ease of connection, the two conducting wires 402 in the photoelectric composite cable 40 may be first respectively pressed into the Y-shaped cutting edges m of the two connecting terminals 43, to complete a preliminary connection between the conducting wires 402 and the connecting terminals 43. Then, the photoelectric composite cable 40 extends from the second port a2 to the mounting position C in the first direction X, to enable the optical fiber 401 to sequentially pass through the tail handle 33 and the inner housing 32 and be connected to the ferrule 31. In addition, the two connecting terminals 43 are sequentially snap-fitted on the two conductive sheets 41, to implement an electrical connection between the conducting wires 402 and the conductive sheets 41. Then, the cover 2 switches from the second state to the first state, to obtain a structure shown in FIG. 10D. When the cover 2 is rotated to be snap-fitted with the housing 1, the convex ribs 24 on the cover 2 can further apply a force to the conducting wire 402, to enable the conducting wire 402 to enter a vertical slot of the Y-shaped cutting edge m of the connecting terminal 43 to implement a good electrical connection. The convex ribs 24 can further achieve a specific pressing function for the connection between the conducting wire 402 and the Y-shaped cutting edge m, to avoid a poor electrical connection caused by the conducting wire 402 sliding out of the Y-shaped cutting edge m. For each conducting wire 402, a plurality of convex ribs 24 may be disposed in an extension direction of the photoelectric composite cable 40, to press the conducting wire 402 into the two Y-shaped cutting edges m of the connecting terminal 43 in the extension direction of the conducting wire 402. Specifically, three convex ribs 24 are disposed in a length direction of the conducting wire 402. Two of the convex ribs 24 are respectively located at the two connecting terminals 43 in the extension direction of the conducting wire 402, and the third convex rib 24 is located between the two Y-shaped cutting edges m of the connecting terminal 43. In this way, the photoelectric composite cable 40 can implement a photoelectric connection to the photoelectric connector 10.

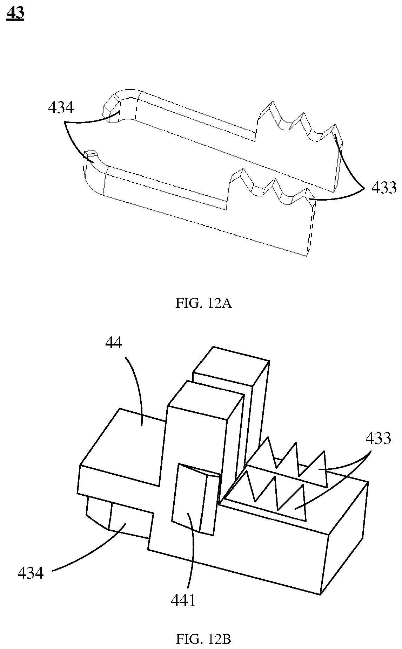

In some other embodiments, a diagram of a structure of the electrical connecting structure 4 is shown in FIG. 11. A structure of the connecting terminal 43 may be shown with reference to FIG. 12A. A connecting portion 433 and a connecting claw 434 are respectively formed at two ends of the connecting terminal 43. Further, refer to FIG. 12B. The electrical connecting structure 4 further includes a matching part 44. Mounting protrusions 441 are disposed on two sides of the matching part 44 in the second direction Y, and the matching part 44 may be fastened on the housing 1 through the mounting protrusions 441. When the matching part 44 is mounted in the housing 1, the mounting protrusion 441 is snap-fitted with the housing 1. The two connecting terminals 43 are fastened on the matching part 44, and the connecting portion 433 and the connecting claw 434 of the connecting terminal 43 respectively extend out of the two sides of the matching part 44 in the first direction X. The connecting portion 433 is configured to connect the conducting wire 402 in the photoelectric composite cable 40. Spiked teeth facing the conducting wire 402 are formed on the connecting portion 433. When the photoelectric composite cable 40 is connected to the mounting position C, pressure is applied to the photoelectric composite cable 40, and the spiked teeth may penetrate the sheath of the photoelectric composite cable 40, to enable the connecting portion 433 to be in contact with the conducting wire 402 to implement an electrical connection. End portions of the two connecting claws 434 are in a holding shape, as shown in FIG. 12A. When the matching part 44 is mounted in the housing **1,** the two connecting claws 434 can respectively clamp on two sides of the two conductive sheets 41, as shown in FIG. 11, to enable the connecting claws 434 to be in contact with and connected to the two conductive sheets 41. The matching part 44 may be an insulating housing, and a mounting channel is disposed in a part of an area of the matching part 44. When the connecting terminal 43 is mounted on the matching part 44, the connecting portion 433 and the connecting claw 434 can extend out of two ends of the mounting channel.

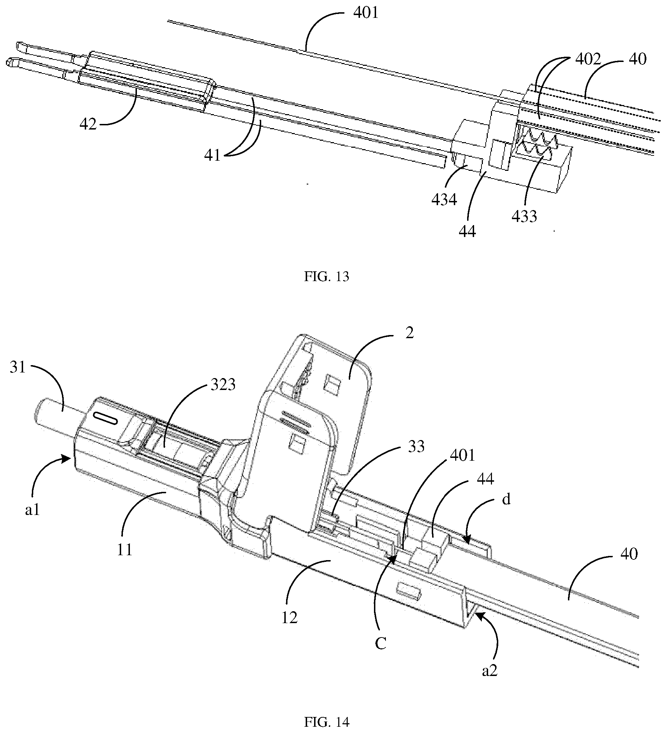

As shown in FIG. 13, when the electrical connecting structure 4 shown in FIG. **11** is connected to the photoelectric composite cable 40, the matching part 44 provides support for the two connecting claws 434, to enable the two connecting claws 434 to clamp on the two sides of the two conductive sheets 41. The photoelectric composite cable 40 applies a force to the spiked teeth on the connecting portion 433 in a thickness direction of the photoelectric composite cable 40, to enable the spiked teeth to penetrate the cable sheath of the photoelectric composite cable 40 to be in contact with the conducting wire 402 in the photoelectric composite cable 40. The conducting wire 402 is shown in dotted lines herein due to blocking by the cable sheath.

For a connecting structure of the photoelectric connector 10 that has the electrical connecting structure 4 shown in FIG. 11 and the photoelectric composite cable 40, refer to FIG. 14. Refer to FIG. 13 and FIG. 14 together. During onsite construction, the matching part 44 is first mounted in the housing 1, to mount the connecting terminal 43. Then, the photoelectric composite cable 40 is inserted into the mounting position C from the second port a2 of the housing 1, and the optical fiber 401 in the photoelectric composite cable 40 sequentially passes through the tail handle 33 and the inner housing 32, and is inserted into the ferrule 31 to implement a fiber connection. The photoelectric composite cable 40 is pressed toward the connecting portion 433 of the connecting terminal 43, and the spiked teeth on the connecting portion 433 may penetrate the cable sheath of the photoelectric composite cable 40, to enable the connecting portion 433 to be in contact with the conducting wire 402 to implement the electrical connection. The connecting portion 433 and the conducting wire 402 are blocked by the photoelectric composite cable 40 and are not shown in FIG. 14. Finally, the cover 2 switches from the second state to the first state, and an obtained structure is similar to the structure shown in FIG. 10D. Details are not described herein again by using an example.

It should be understood that, the cover 2 in the foregoing embodiments is rotatably mounted on the housing 1, and is only an implementation of a connection and matching between the cover 2 and the housing 1. Possibly, the cover 2 is a structure independent of the housing 1. When not being mounted, the cover 2 is separated from the housing 1. After the fiber connecting structure 3, the electrical connecting structure 4, and the photoelectric composite cable 40 are connected, the cover 2 is mounted on the housing 1 in a matching manner, to enable the cover 2 to match the housing 1 to fasten the photoelectric composite cable 40. Certainly, there may be another structure form and another connection method for the cover 2 and the housing 1. This is not limited in embodiments of this application.

In conclusion, in the photoelectric connector 10 provided in embodiments of this application, the connecting terminal 43 and the conductive sheet 41 in the electrical connecting structure 4 are electrically connected in a detachable connection method such as snap-fitting or contact and connection. During onsite construction, connecting terminals 43 of different structures may be replaced as required, and mounting methods and mounting sequences of different connecting terminals 43 may be changed as required, so that onsite construction of the photoelectric connector 10 can be further adaptively adjusted, to improve convenience of onsite construction, and expand an application scope of the photoelectric connector 10. In addition, the electrical connecting structure 4 and the fiber connecting structure 3 are arranged in a thickness direction of the housing 1 inside the housing 1, so that the electrical connecting structure 4 can be blocked by the fiber connecting structure 3 and is not exposed outside the housing 1. This can provide good protection for the electrical connecting structure 4, and avoid damage to the electrical connecting structure 4 or a security risk caused by exposure of the electrical connecting structure 4.

An embodiment of this application further provides a connector assembly. The connector assembly includes the photoelectric connector 10 and the photoelectric composite cable 40. For a connecting structure of the photoelectric connector 10 and the photoelectric composite cable 40 in the connector assembly, refer to examples in FIG. 10C, FIG. 10D, and FIG. 14. During onsite construction of the connector assembly, the fiber connecting structure 3 in the photoelectric connector 10 can be connected to the optical fiber 401 in the photoelectric composite cable 40 on site, and the electrical connecting structure 4 in the photoelectric connector 10 can be connected to the conducting wires 402 in the photoelectric composite cable 40 on site. This achieves higher onsite operation convenience and connection reliability. After the photoelectric connector 10 is connected to the photoelectric composite cable 40 on site, the cover 2 of the photoelectric connector 10 can be snap-fitted with the base 12 in the first state, to firmly connect the photoelectric composite cable 40 to the photoelectric connector 10. In addition, the electrical connecting structure 4 in the photoelectric connector 10 can be blocked by the housing 1 and the fiber connecting structure 3 without being exposed, to achieve higher electrical connection reliability and security.

It is clear that, a person skilled in the art can make various modifications and variations to embodiments of the present invention without departing from the scope of the present invention. In this case, the present invention is intended to cover these modifications and variations of the present invention provided that they fall within the scope of the claims and their equivalent technologies.

## Claims

1. A photoelectric connector (10), comprising: a housing (1), a cover (2), a fiber connecting structure (3), and an electrical connecting structure (4), wherein
the housing (1) has a first port (a1) and a second port (a2) that are disposed opposite to each other; in a direction in which the first port (a1) points to the second port (a2), the housing (1) has an accommodation cavity (B) and a mounting position (C) that are in communication with each other, and the mounting position (C) is configured to connect to a photoelectric composite cable (40);
the cover (2) is configured to match the housing (1) to accommodate the photoelectric composite cable (40) that is connected to the mounting position (C); and
the fiber connecting structure (3) and the electrical connecting structure (4) are accommodated in the accommodation cavity (B); one end of the fiber connecting structure (3) extends to the mounting position (C), and the other end of the fiber connecting structure (3) extends to the first port (a1) of the housing (1); and one end of the electrical connecting structure (4) extends to the mounting position (C), and the other end of the electrical connecting structure (4) extends to a side surface or the first port (a1) of the housing (1).

2. The photoelectric connector (10) according to claim 1, wherein the electrical connecting structure (4) comprises two conductive sheets (41) and two connecting terminals (43); and
the two connecting terminals (43) are detachably connected to the two conductive sheets (41) in one-to-one correspondence, and the two connecting terminals (43) are configured to connect two conducting wires (402) of the photoelectric composite cable (40).

3. The photoelectric connector (10) according to claim 2, wherein the connecting terminal (43) comprises a fastening section (431) and two socket sections (432) that are connected to two ends of the fastening section (431), the fastening section (431) is connected to the conductive sheet (41), and the two socket sections (432) are configured to connect the two conducting wires (402) of the photoelectric composite cable (40).

4. The photoelectric connector (10) according to claim 3, wherein the two socket sections (432) are disposed opposite to each other, and a Y-shaped cutting edge (m) that is used for the conducting wire (402) to be pressed into is formed at one end of the socket section (432) away from the fastening section (431).

5. The photoelectric connector (10) according to claim 4, wherein a convex rib (24) is disposed on a side of the cover (2) facing the housing (1), and the convex rib (24) is configured to press the conducting wire (402) into the Y-shaped cutting edge (m).

6. The photoelectric connector (10) according to any one of claims 3 to 5, wherein the fastening section (431) has a notch (k); and when the fastening section (431) is connected to the conductive sheet (41), the notch (k) is snap-fitted with the conductive sheet (41).

7. The photoelectric connector (10) according to claim 2, wherein a connecting claw (434) and a connecting portion (433) are respectively formed at two ends of each connecting terminal (43), the connecting claw (434) is in contact with and connected to the conductive sheet (41), and spiked teeth are formed on a side of the connecting portion (433) facing the photoelectric composite cable (40).

8. The photoelectric connector (10) according to claim 7, wherein the electrical connecting structure (4) further comprises a matching part (44), the matching part (44) is fastened on the housing (1), and the two connecting terminals (43) are fastened on the matching part (44).

9. The photoelectric connector (10) according to any one of claims 2 to 8, wherein the electrical connecting structure (4) further comprises a coupling sheet (42), and the coupling sheet (42) is connected between the two conductive sheets (41).

10. The photoelectric connector (10) according to any one of claims 1 to 9, wherein the fiber connecting structure (3) comprises a ferrule (31), an inner housing (32), and a tail handle (33); and
the inner housing (32) is fastened in the accommodation cavity (B), and the ferrule (31) and the tail handle (33) are respectively connected to two ends of the inner housing (32); and one end of the ferrule (31) away from the tail handle (33) extends out of the first port (a1) of the housing (1), and the ferrule (31) is configured to connect to an optical fiber (401) in the photoelectric composite cable (40).

11. The photoelectric connector (10) according to claim 10, wherein the inner housing (32) comprises a bottom housing (321), a top housing (322), and a sleeve housing (323); and
the bottom housing (321) and the top housing (322) are snap-fitted to form a channel for the optical fiber (401) in the photoelectric composite cable (40) to pass through; and the sleeve housing (323) is sleeved outside the bottom housing (321) and the top housing (322) to lock the bottom housing (321) and the top housing (322).

12. The photoelectric connector (10) according to claim 11, wherein a locking rib (g) is disposed on a side of the top housing (322) away from the bottom housing (321); and a height of the locking rib (g) protruding from the top housing (322) gradually increases in a direction in which the tail handle (33) points to the ferrule (31).

13. The photoelectric connector (10) according to claim 11 or 12, wherein a window (n) in communication with the accommodation cavity (B) is provided on the housing (1), and at least a part of the sleeve housing (323) is exposed from the window (n).

14. The photoelectric connector (10) according to claim 13, wherein a lock groove (j) is provided on the sleeve housing (323), and the lock groove (j) is exposed from the window (n).

15. The photoelectric connector (10) according to any one of claims 11 to 14, wherein a spring (34) is disposed between the bottom housing (321) and the housing (1), and the spring (34) is sleeved on the tail handle (33).

16. The photoelectric connector (10) according to any one of claims 1 to 15, wherein the cover (2) is rotatably connected to the housing (1), and the cover (2) has a first state and a second state; and
when the cover (2) is in the first state, the cover (2) matches the housing (1) to form accommodation space for accommodating the photoelectric composite cable (40); and when the cover (2) is in the second state, the mounting position (C) is exposed.

17. The photoelectric connector (10) according to any one of claims 1 to 16, wherein the housing (1) comprises a front housing (11) and a base (12), and the front housing (11) is snap-fitted with the base (12); the accommodation cavity (B) is formed on the front housing (11), and the mounting position (C) is formed on the base (12); and the cover (2) is rotatably connected to the front housing (11).

18. The photoelectric connector (10) according to claim 17, wherein a second snap fastener (122) is disposed on the base (12), and a second bayonet (22) is disposed on the cover (2); and when the cover (2) and the housing (1) are matched, the second bayonet (22) is snap-fitted with the second snap fastener (122).

19. The photoelectric connector (10) according to any one of claims 1 to 18, wherein a pressing portion (23) is disposed on a side of the cover (2) facing the housing (1), and the pressing portion (23) is configured to press the photoelectric composite cable (40).

20. A connector assembly, comprising a photoelectric composite cable (40) and the photoelectric connector (10) according to any one of claims 1 to 19, wherein
an optical fiber (401) in the photoelectric composite cable (40) is connected to a fiber connecting structure (3) in the photoelectric connector (10), and a conducting wire (402) in the photoelectric composite cable (40) is connected to an electrical connecting structure (4) in the photoelectric connector (10).

21. A communication device, comprising a mounting box (30) and the connector assembly according to claim 20, wherein the connector assembly is mounted in the mounting box (30).
